# EUROPEAN PATENT APPLICATION

(11) **EP 4 730 096 A1**
(43) Date of publication of application: **22.04.2026**
(21) Application number: 24843325.2
(22) Date of filing: 17.06.2024
(51) Int. Cl.: G06F 3/04845, G06F 3/0488, G06F 9/451

(54) **ELECTRONIC DEVICE INCLUDING DISPLAY AND METHOD OF PROVIDING GUIDE FOR SCREEN SPLITTING BY ELECTRONIC DEVICE**

(30) Priority: 20.07.2023 KR 20230094731; 06.09.2023 KR 20230118216
(71) Applicant: Samsung Electronics Co., Ltd., Suwon-si, Gyeonggi-do 16677 (KR)
(72) Inventor: JWA, Yeonjoo, Suwon-si, Gyeonggi-do 16677 (KR); YANG, Minho, Suwon-si, Gyeonggi-do 16677 (KR); LIM, Eunsil, Suwon-si, Gyeonggi-do 16677 (KR)
(74) Representative: HGF
(86) International application number: PCT/KR2024/008282
(87) International publication number: WO 2025/018604

(57) **Abstract**

This electronic device may comprise a display, a processor, and a memory, wherein the processor is configured to: on the basis of a first user input being detected within a first window area displaying a running application displayed on a higher layer on the display, display a virtual split area separated from the first window area; on the basis of the first window area being moved to a particular trigger area according to the first user input, display the first window area and the virtual split area not to be overlapped with each other on the basis of the center of the display; generate a split screen on the basis of a displayed layout in response to the termination of the first user input; and display a screen of the running application on a first split area corresponding to the first window area and display a list of applications on a second split area corresponding to the virtual split area.

## Description

### [Technical Field]

The disclosure relates to an electronic device and, for example, to an electronic device that provides a guide for splitting a screen and differently displays the size of an application, based on a touch input of a user.

### [Background Art]

An electronic device is evolving beyond a uniform form to a structure of expanding a display or improving usability of a display. An electronic device may have a flexible structure that allows the size of a display to be adjusted. For example, an electronic device may operate in an in-folding, out-folding, or in/out-folding manner with first and second housings pivoting relative to each other. In another example, an electronic device may operate in a manner such that first and second housings slide and/or roll.

A recent electronic device offers a function of displaying execution screens of two or more programs or applications together on a single screen. For example, to display execution screens of two or more applications, an electronic device may split a display into two or more areas and display the execution screens of the applications in the respective split areas, or display a plurality of windows displaying the execution screens of the two or more applications to overlap.

### [Disclosure of Invention]

### [Technical Problem]

A conventional smartphone or tablet may adopt a configuration of displaying a window for displaying an application across the entire touchscreen when executing the application.

To execute another application while executing the application, the smartphone or tablet needs to stop displaying the application to display the other application. To execute the other application, a user inconveniently needs to input an operation of switching to the initial menu screen, and then input an operation of executing the other application on the menu screen.

An electronic device according to the disclosure may provide a method for controlling a multi-window screen that displays execution windows for one or more applications on a display.

An electronic device according to the disclosure may provide a method for controlling a layout of a screen including execution windows for one or more applications, based on a user input.

An electronic device may include a display, a processor, and a memory, wherein the processor may be configured to: based on a first user input being detected within a first window area which is displayed in an upper layer on the display and in which an application being executed is displayed, display a virtual split area separated from the first window area; based on the first window area moving to a specific trigger area according to the first user input, display the first window area and the virtual split area not to overlap with respect to a center of the display; based on the first user input being terminated, generate a split screen, based on a displayed layout; display a screen of the application being executed in a first split area corresponding to the first window area; and display a list of applications in a second split area corresponding to the virtual split area.

An electronic device may include a display, a processor, and a memory, wherein the processor may be configured to: based on a first user input being detected within a first window area displayed in an upper layer on the display, display a layout of a virtual split area separated from the first window area; based on the first user input being applied to a specific trigger area in a situation in which the first user input is detected, determine a position of the first window area and a position of the virtual split area; determine a ratio at which the virtual split area is divided, based on a type and a position of a second user input to the layout of the virtual split area; and based on the second user input being terminated, divide the virtual split area into a plurality of screens according to the determined ratio and display the plurality of screens.

An operating method of an electronic device may include: based on a first user input being detected within a first window area displayed in an upper layer on the display, displaying a layout of a virtual split area separated from the first window area; based on the first user input being applied to a specific trigger area in a situation in which the first user input is detected, determining a position of the first window area and a position of the virtual split area; determining a ratio at which the virtual split area is divided, based on a type and a position of a second user input to the layout of the virtual split area; and based on the second user input being terminated, dividing the virtual split area into a plurality of screens according to the determined ratio and displaying the plurality of screens.

An electronic device according to the disclosure may display a preview of a split screen, based on another user input, while attempting to switch to a split screen, thereby providing a user with a guide to how a final split screen will be generated.

An electronic device according to the disclosure may control execution windows of a plurality of applications to be simultaneously displayed on a single screen. An electronic device according to the disclosure may provide a user with a function of changing the arrangement of execution windows of one or more applications displayed on a display.

An electronic device according to the disclosure may display a virtual window to visually display the position of the window to a user, may recognize a multi-touch input from the user, and may perform splitting into three or four parts.

### [Brief Description of Drawings]

FIG. 1 is a block diagram of an electronic device in a network environment according to various embodiments.
FIG. 2 is a block diagram of an electronic device according to an embodiment.
FIG. 3A to FIG. 3F illustrate a screen splitting process of an electronic device according to an embodiment.
FIG. 4A and FIG. 4B illustrate screen splitting of an electronic device and a list of applications displayed on a split screen.
FIG. 5A to FIG. 5F illustrate a process of splitting a screen into three parts on an electronic device according to an embodiment.
FIG. 6A to FIG. 6C illustrate a process of splitting a screen into four parts on an electronic device according to an embodiment.
FIG. 7 is a flowchart illustrating a screen splitting method of an electronic device according to an embodiment.
FIG. 8 is a flowchart illustrating a screen splitting method of an electronic device according to an embodiment.

### [Mode for the Invention]

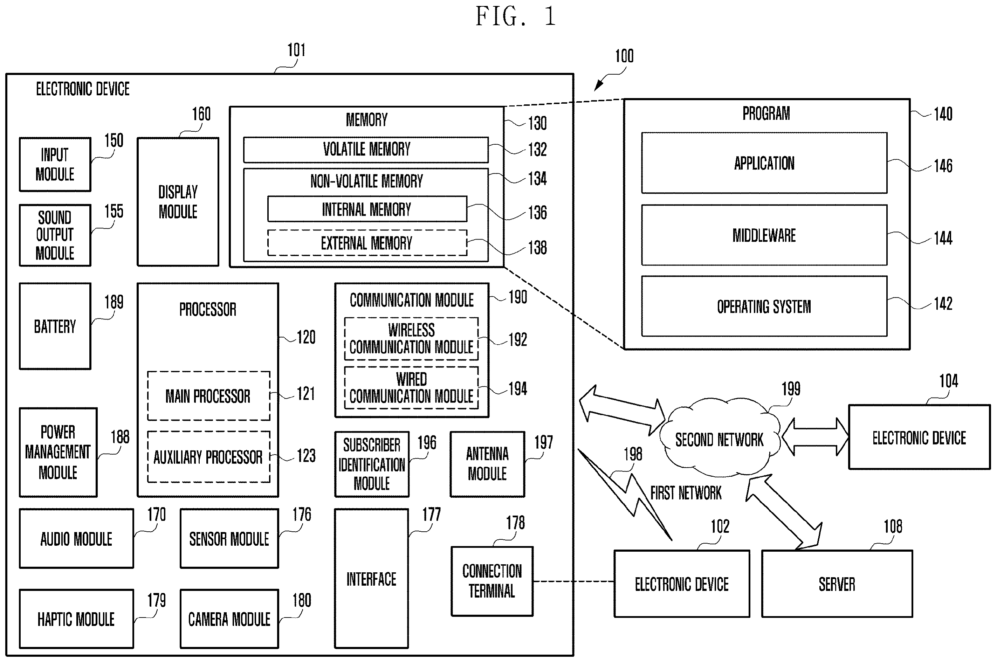

Fig. 1 is a block diagram illustrating an electronic device 101 in a network environment 100 according to various embodiments. Referring to Fig. 1, the electronic device 101 in the network environment 100 may communicate with an electronic device 102 via a first network 198 (e.g., a short-range wireless communication network), or at least one of an electronic device 104 or a server 108 via a second network 199 (e.g., a long-range wireless communication network). According to an embodiment, the electronic device 101 may communicate with the electronic device 104 via the server 108. According to an embodiment, the electronic device 101 may include a processor 120, memory 130, an input module 150, a sound output module 155, a display module 160, an audio module 170, a sensor module 176, an interface 177, a connecting terminal 178, a haptic module 179, a camera module 180, a power management module 188, a battery 189, a communication module 190, a subscriber identification module(SIM) 196, or an antenna module 197. In some embodiments, at least one of the components (e.g., the connecting terminal 178) may be omitted from the electronic device 101, or one or more other components may be added in the electronic device 101. In some embodiments, some of the components (e.g., the sensor module 176, the camera module 180, or the antenna module 197) may be implemented as a single component (e.g., the display module 160).

The processor 120 may execute, for example, software (e.g., a program 140) to control at least one other component (e.g., a hardware or software component) of the electronic device 101 coupled with the processor 120, and may perform various data processing or computation. According to one embodiment, as at least part of the data processing or computation, the processor 120 may store a command or data received from another component (e.g., the sensor module 176 or the communication module 190) in volatile memory 132, process the command or the data stored in the volatile memory 132, and store resulting data in non-volatile memory 134. According to an embodiment, the processor 120 may include a main processor 121 (e.g., a central processing unit (CPU) or an application processor (AP)), or an auxiliary processor 123 (e.g., a graphics processing unit (GPU), a neural processing unit (NPU), an image signal processor (ISP), a sensor hub processor, or a communication processor (CP)) that is operable independently from, or in conjunction with, the main processor 121. For example, when the electronic device 101 includes the main processor 121 and the auxiliary processor 123, the auxiliary processor 123 may be adapted to consume less power than the main processor 121, or to be specific to a specified function. The auxiliary processor 123 may be implemented as separate from, or as part of the main processor 121.

The auxiliary processor 123 may control at least some of functions or states related to at least one component (e.g., the display module 160, the sensor module 176, or the communication module 190) among the components of the electronic device 101, instead of the main processor 121 while the main processor 121 is in an inactive (e.g., sleep) state, or together with the main processor 121 while the main processor 121 is in an active state (e.g., executing an application). According to an embodiment, the auxiliary processor 123 (e.g., an image signal processor or a communication processor) may be implemented as part of another component (e.g., the camera module 180 or the communication module 190) functionally related to the auxiliary processor 123. According to an embodiment, the auxiliary processor 123 (e.g., the neural processing unit) may include a hardware structure specified for artificial intelligence model processing. An artificial intelligence model may be generated by machine learning. Such learning may be performed, e.g., by the electronic device 101 where the artificial intelligence is performed or via a separate server (e.g., the server 108). Learning algorithms may include, but are not limited to, e.g., supervised learning, unsupervised learning, semi-supervised learning, or reinforcement learning. The artificial intelligence model may include a plurality of artificial neural network layers. The artificial neural network may be a deep neural network (DNN), a convolutional neural network (CNN), a recurrent neural network (RNN), a restricted boltzmann machine (RBM), a deep belief network (DBN), a bidirectional recurrent deep neural network (BRDNN), deep Q-network or a combination of two or more thereof but is not limited thereto. The artificial intelligence model may, additionally or alternatively, include a software structure other than the hardware structure.

The memory 130 may store various data used by at least one component (e.g., the processor 120 or the sensor module 176) of the electronic device 101. The various data may include, for example, software (e.g., the program 140) and input data or output data for a command related thererto. The memory 130 may include the volatile memory 132 or the non-volatile memory 134.

The program 140 may be stored in the memory 130 as software, and may include, for example, an operating system (OS) 142, middleware 144, or an application 146.

The input module 150 may receive a command or data to be used by another component (e.g., the processor 120) of the electronic device 101, from the outside (e.g., a user) of the electronic device 101. The input module 150 may include, for example, a microphone, a mouse, a keyboard, a key (e.g., a button), or a digital pen (e.g., a stylus pen).

The sound output module 155 may output sound signals to the outside of the electronic device 101. The sound output module 155 may include, for example, a speaker or a receiver. The speaker may be used for general purposes, such as playing multimedia or playing record. The receiver may be used for receiving incoming calls. According to an embodiment, the receiver may be implemented as separate from, or as part of the speaker.

The display module 160 may visually provide information to the outside (e.g., a user) of the electronic device 101. The display module 160 may include, for example, a display, a hologram device, or a projector and control circuitry to control a corresponding one of the display, hologram device, and projector. According to an embodiment, the display module 160 may include a touch sensor adapted to detect a touch, or a pressure sensor adapted to measure the intensity of force incurred by the touch.

The audio module 170 may convert a sound into an electrical signal and vice versa. According to an embodiment, the audio module 170 may obtain the sound via the input module 150, or output the sound via the sound output module 155 or a headphone of an external electronic device (e.g., an electronic device 102) directly (e.g., wiredly) or wirelessly coupled with the electronic device 101.

The sensor module 176 may detect an operational state (e.g., power or temperature) of the electronic device 101 or an environmental state (e.g., a state of a user) external to the electronic device 101, and then generate an electrical signal or data value corresponding to the detected state. According to an embodiment, the sensor module 176 may include, for example, a gesture sensor, a gyro sensor, an atmospheric pressure sensor, a magnetic sensor, an acceleration sensor, a grip sensor, a proximity sensor, a color sensor, an infrared (IR) sensor, a biometric sensor, a temperature sensor, a humidity sensor, or an illuminance sensor.

The interface 177 may support one or more specified protocols to be used for the electronic device 101 to be coupled with the external electronic device (e.g., the electronic device 102) directly (e.g., wiredly) or wirelessly. According to an embodiment, the interface 177 may include, for example, a high definition multimedia interface (HDMI), a universal serial bus (USB) interface, a secure digital (SD) card interface, or an audio interface.

A connecting terminal 178 may include a connector via which the electronic device 101 may be physically connected with the external electronic device (e.g., the electronic device 102). According to an embodiment, the connecting terminal 178 may include, for example, a HDMI connector, a USB connector, a SD card connector, or an audio connector (e.g., a headphone connector).

The haptic module 179 may convert an electrical signal into a mechanical stimulus (e.g., a vibration or a movement) or electrical stimulus which may be recognized by a user via his tactile sensation or kinesthetic sensation. According to an embodiment, the haptic module 179 may include, for example, a motor, a piezoelectric element, or an electric stimulator.

The camera module 180 may capture a still image or moving images. According to an embodiment, the camera module 180 may include one or more lenses, image sensors, image signal processors, or flashes.

The power management module 188 may manage power supplied to the electronic device 101. According to one embodiment, the power management module 188 may be implemented as at least part of, for example, a power management integrated circuit (PMIC).

The battery 189 may supply power to at least one component of the electronic device 101. According to an embodiment, the battery 189 may include, for example, a primary cell which is not rechargeable, a secondary cell which is rechargeable, or a fuel cell.

The communication module 190 may support establishing a direct (e.g., wired) communication channel or a wireless communication channel between the electronic device 101 and the external electronic device (e.g., the electronic device 102, the electronic device 104, or the server 108) and performing communication via the established communication channel. The communication module 190 may include one or more communication processors that are operable independently from the processor 120 (e.g., the application processor (AP)) and supports a direct (e.g., wired) communication or a wireless communication. According to an embodiment, the communication module 190 may include a wireless communication module 192 (e.g., a cellular communication module, a short-range wireless communication module, or a global navigation satellite system (GNSS) communication module) or a wired communication module 194 (e.g., a local area network (LAN) communication module or a power line communication (PLC) module). A corresponding one of these communication modules may communicate with the external electronic device via the first network 198 (e.g., a short-range communication network, such as BluetoothTM, wireless-fidelity (Wi-Fi) direct, or infrared data association (IrDA)) or the second network 199 (e.g., a long-range communication network, such as a legacy cellular network, a 5G network, a next-generation communication network, the Internet, or a computer network (e.g., LAN or wide area network (WAN)). These various types of communication modules may be implemented as a single component (e.g., a single chip), or may be implemented as multi components (e.g., multi chips) separate from each other. The wireless communication module 192 may identify and authenticate the electronic device 101 in a communication network, such as the first network 198 or the second network 199, using subscriber information (e.g., international mobile subscriber identity (IMSI)) stored in the subscriber identification module 196.

The wireless communication module 192 may support a 5G network, after a 4G network, and next-generation communication technology, e.g., new radio (NR) access technology. The NR access technology may support enhanced mobile broadband (eMBB), massive machine type communications (mMTC), or ultra-reliable and low-latency communications (URLLC). The wireless communication module 192 may support a high-frequency band (e.g., the mmWave band) to achieve, e.g., a high data transmission rate. The wireless communication module 192 may support various technologies for securing performance on a high-frequency band, such as, e.g., beamforming, massive multiple-input and multiple-output (massive MIMO), full dimensional MIMO (FD-MIMO), array antenna, analog beam-forming, or large scale antenna. The wireless communication module 192 may support various requirements specified in the electronic device 101, an external electronic device (e.g., the electronic device 104), or a network system (e.g., the second network 199). According to an embodiment, the wireless communication module 192 may support a peak data rate (e.g., 20Gbps or more) for implementing eMBB, loss coverage (e.g., 164dB or less) for implementing mMTC, or U-plane latency (e.g., 0.5ms or less for each of downlink (DL) and uplink (UL), or a round trip of 1ms or less) for implementing URLLC.

The antenna module 197 may transmit or receive a signal or power to or from the outside (e.g., the external electronic device) of the electronic device 101. According to an embodiment, the antenna module 197 may include an antenna including a radiating element composed of a conductive material or a conductive pattern formed in or on a substrate (e.g., a printed circuit board (PCB)). According to an embodiment, the antenna module 197 may include a plurality of antennas (e.g., array antennas). In such a case, at least one antenna appropriate for a communication scheme used in the communication network, such as the first network 198 or the second network 199, may be selected, for example, by the communication module 190 (e.g., the wireless communication module 192) from the plurality of antennas. The signal or the power may then be transmitted or received between the communication module 190 and the external electronic device via the selected at least one antenna. According to an embodiment, another component (e.g., a radio frequency integrated circuit (RFIC)) other than the radiating element may be additionally formed as part of the antenna module 197.

According to various embodiments, the antenna module 197 may form a mmWave antenna module. According to an embodiment, the mmWave antenna module may include a printed circuit board, a RFIC disposed on a first surface (e.g., the bottom surface) of the printed circuit board, or adjacent to the first surface and capable of supporting a designated high-frequency band (e.g., the mmWave band), and a plurality of antennas (e.g., array antennas) disposed on a second surface (e.g., the top or a side surface) of the printed circuit board, or adjacent to the second surface and capable of transmitting or receiving signals of the designated high-frequency band.

At least some of the above-described components may be coupled mutually and communicate signals (e.g., commands or data) therebetween via an inter-peripheral communication scheme (e.g., a bus, general purpose input and output (GPIO), serial peripheral interface (SPI), or mobile industry processor interface (MIPI)).

According to an embodiment, commands or data may be transmitted or received between the electronic device 101 and the external electronic device 104 via the server 108 coupled with the second network 199. Each of the electronic devices 102 or 104 may be a device of a same type as, or a different type, from the electronic device 101. According to an embodiment, all or some of operations to be executed at the electronic device 101 may be executed at one or more of the external electronic devices 102, 104, or 108. For example, if the electronic device 101 should perform a function or a service automatically, or in response to a request from a user or another device, the electronic device 101, instead of, or in addition to, executing the function or the service, may request the one or more external electronic devices to perform at least part of the function or the service. The one or more external electronic devices receiving the request may perform the at least part of the function or the service requested, or an additional function or an additional service related to the request, and transfer an outcome of the performing to the electronic device 101. The electronic device 101 may provide the outcome, with or without further processing of the outcome, as at least part of a reply to the request. To that end, a cloud computing, distributed computing, mobile edge computing (MEC), or client-server computing technology may be used, for example. The electronic device 101 may provide ultra low-latency services using, e.g., distributed computing or mobile edge computing. In another embodiment, the external electronic device 104 may include an internet-of-things (IoT) device. The server 108 may be an intelligent server using machine learning and/or a neural network. According to an embodiment, the external electronic device 104 or the server 108 may be included in the second network 199. The electronic device 101 may be applied to intelligent services (e.g., smart home, smart city, smart car, or healthcare) based on 5G communication technology or IoT-related technology.

The electronic device according to various embodiments may be one of various types of electronic devices. The electronic devices may include, for example, a portable communication device (e.g., a smartphone), a computer device, a portable multimedia device, a portable medical device, a camera, a wearable device, or a home appliance. According to an embodiment of the disclosure, the electronic devices are not limited to those described above.

It should be appreciated that various embodiments of the present disclosure and the terms used therein are not intended to limit the technological features set forth herein to particular embodiments and include various changes, equivalents, or replacements for a corresponding embodiment. With regard to the description of the drawings, similar reference numerals may be used to refer to similar or related elements. It is to be understood that a singular form of a noun corresponding to an item may include one or more of the things, unless the relevant context clearly indicates otherwise. As used herein, each of such phrases as "A or B," "at least one of A and B," "at least one of A or B," "A, B, or C," "at least one of A, B, and C," and "at least one of A, B, or C," may include any one of, or all possible combinations of the items enumerated together in a corresponding one of the phrases. As used herein, such terms as "1st" and "2nd," or "first" and "second" may be used to simply distinguish a corresponding component from another, and does not limit the components in other aspect (e.g., importance or order). It is to be understood that if an element (e.g., a first element) is referred to, with or without the term "operatively" or "communicatively", as "coupled with," "coupled to," "connected with," or "connected to" another element (e.g., a second element), it means that the element may be coupled with the other element directly (e.g., wiredly), wirelessly, or via a third element.

As used in connection with various embodiments of the disclosure, the term "module" may include a unit implemented in hardware, software, or firmware, and may interchangeably be used with other terms, for example, "logic," "logic block," "part," or "circuitry". A module may be a single integral component, or a minimum unit or part thereof, adapted to perform one or more functions. For example, according to an embodiment, the module may be implemented in a form of an application-specific integrated circuit (ASIC).

Various embodiments as set forth herein may be implemented as software (e.g., the program 140) including one or more instructions that are stored in a storage medium (e.g., internal memory 136 or external memory 138) that is readable by a machine (e.g., the electronic device 101). For example, a processor (e.g., the processor 120) of the machine (e.g., the electronic device 101) may invoke at least one of the one or more instructions stored in the storage medium, and execute it, with or without using one or more other components under the control of the processor. This allows the machine to be operated to perform at least one function according to the at least one instruction invoked. The one or more instructions may include a code generated by a complier or a code executable by an interpreter. The machine-readable storage medium may be provided in the form of a non-transitory storage medium. Wherein, the term "non-transitory" simply means that the storage medium is a tangible device, and does not include a signal (e.g., an electromagnetic wave), but this term does not differentiate between where data is semi-permanently stored in the storage medium and where the data is temporarily stored in the storage medium.

According to an embodiment, a method according to various embodiments of the disclosure may be included and provided in a computer program product. The computer program product may be traded as a product between a seller and a buyer. The computer program product may be distributed in the form of a machine-readable storage medium (e.g., compact disc read only memory (CD-ROM)), or be distributed (e.g., downloaded or uploaded) online via an application store (e.g., PlayStoreTM), or between two user devices (e.g., smart phones) directly. If distributed online, at least part of the computer program product may be temporarily generated or at least temporarily stored in the machine-readable storage medium, such as memory of the manufacturer's server, a server of the application store, or a relay server.

According to various embodiments, each component (e.g., a module or a program) of the above-described components may include a single entity or multiple entities, and some of the multiple entities may be separately disposed in different components. According to various embodiments, one or more of the above-described components may be omitted, or one or more other components may be added. Alternatively or additionally, a plurality of components (e.g., modules or programs) may be integrated into a single component. In such a case, according to various embodiments, the integrated component may still perform one or more functions of each of the plurality of components in the same or similar manner as they are performed by a corresponding one of the plurality of components before the integration. According to various embodiments, operations performed by the module, the program, or another component may be carried out sequentially, in parallel, repeatedly, or heuristically, or one or more of the operations may be executed in a different order or omitted, or one or more other operations may be added.

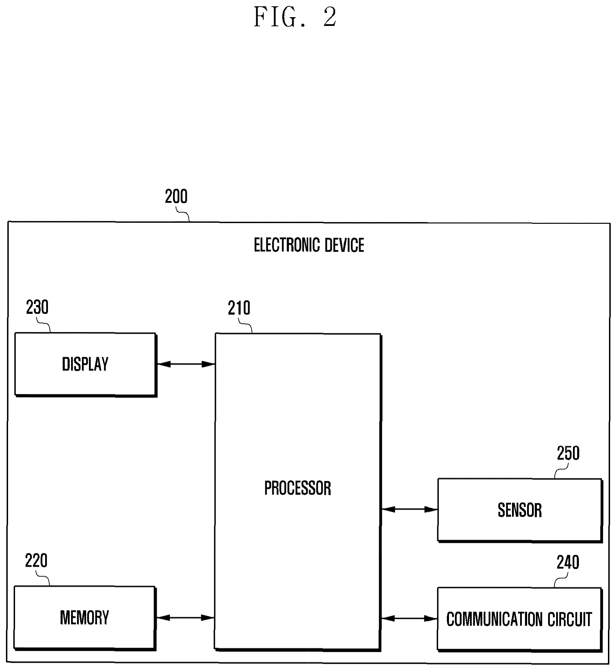

FIG. 2 is a block diagram of an electronic device according to an embodiment.

Referring to FIG. 2, the electronic device 200 may include a processor 210, a memory 220, a display 230, a communication circuit 240, and a sensor 250. Even though at least some of the illustrated components may be omitted and/or replaced, embodiments of the disclosure are still be implementable. The electronic device 200 may further include at least some of the components and/or functions of the electronic device 101 of FIG. 1.

Some components (e.g., the processor 210, the memory 220, and the communication circuit 240) of the components illustrated in FIG. 2 and/or other components of the electronic device 200 not shown may be disposed within a housing (not shown) of the electronic device 200, and at least a portion of some components (e.g., the display 230) may be exposed outside the housing.

According to an embodiment, the display 230 may display content provided from the processor 210.

According to an embodiment, the electronic device 200 may be in a form of being entirely foldable without a folding axis. The display 230 may be disposed on the front surface of the electronic device 200, and the display 230 may be a rollable display. When the electronic device 200 is fully unfolded, an application execution screen may be displayed on the entire electronic device 200.

According to an embodiment, the display 230 may be configured as a touch screen that detects a touch and/or proximity touch (or hovering) input using a body part (e.g., a finger) of a user or an input device (e.g., a stylus pen).

According to an embodiment, the electronic device 200 may include at least one sensor 250 that detects contact or proximity. For example, the electronic device 200 may include a proximity sensor that detects proximity to or contact with an object, such as a near-field communication (NFC) sensor, a radio-frequency identification (RFID) sensor, a Bluetooth (or Bluetooth Low Energy) sensor, or a touch sensor.

According to an embodiment, the at least one sensor 250 may be disposed in upper, lower, left, and right bezel areas of the display 230 and/or an edge area of the housing. Accordingly, when selecting an area to display main content or a background image, the user may be facilitated in making a touch or proximity input to a sensor 250 adjacent to an intended area. In various embodiments, one to five sensors 250 may be disposed around the display 230 in the electronic device 200.

According to an embodiment, the communication circuit 240 may provide a wired or wireless communication interface with an external device. For example, the communication circuit 240 may include a high-definition multimedia interface (HDMI) or a universal serial bus (USB) interface as examples of the wired communication interface (e.g., the interface 177 of FIG. 1). Further, the communication circuit 240 may include a wireless communication circuit (e.g., the wireless communication circuit 192 of FIG. 1) that supports short-range communication with the external device. The wireless communication circuit may support a short-range wireless communication mode (e.g., Wi-Fi, Bluetooth, or Bluetooth Low Energy (BLE)), and may include an independent hardware and/or software configuration for supporting each wireless communication mode.

According to an embodiment, the memory 220 may include a volatile memory and a non-volatile memory, and may temporarily or permanently store data. The memory 220 may include at least some of the components and/or functions of the memory 130 of FIG. 1, and may store the program 140 of FIG. 1.

The memory 220 may store instructions executable by the processor 210. The instructions may include control commands for arithmetic and logical operations, data movement, and input/output recognizable by the processor 210.

According to an embodiment, the processor 210 is a component capable of performing operations or data processing related to control and/or communication of each component of the electronic device 200, and may include one or more processors 210. The processor 210 may include at least some of the components and/or functions of the processor 120 of FIG. 1. The processor 210 may be operatively, functionally, and/or electrically connected to each component of the electronic device 200 including the display 230, the memory 220, and the sensor 250.

According to an embodiment, although there is no restriction on computational and data processing functions that the processor 210 is capable of implementing on the electronic device 200, features of determining an area to display main content and a split screen on the display 230 and providing a split guide based on a user's touch input during a switch to a split screen will be described below.

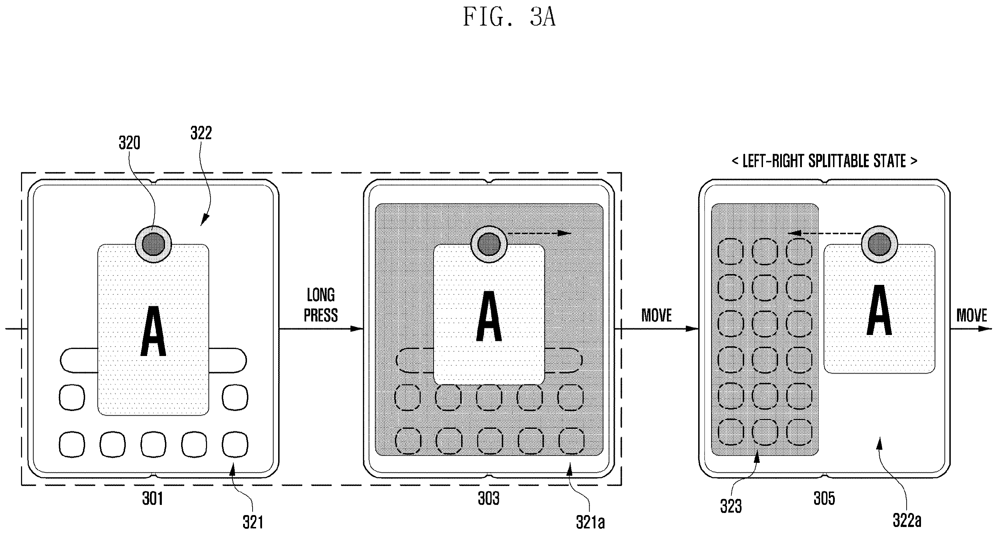

FIG. 3A to FIG. 3F illustrate a screen splitting process of an electronic device according to an embodiment.

In image 301 of FIG. 3A, an electronic device (e.g., the electronic device 200 of FIG. 2) may detect a first user input 320 within a first window area A displayed in an upper layer on a display (e.g., the display 230 of FIG. 2) under control of a processor (e.g., the processor 210 of FIG. 2). The electronic device 200 may display a layout of a virtual split area separated from the first window area A, based on the first user input 320 being determined to be a long-touch input. The first window area A to which the user input is applied may be displayed in a darker color compared to the layout of the virtual split area 323.

The virtual split area 323 may refer to a virtual area for displaying a window for which an application to be executed has not been determined. The virtual split area 323 may be displayed as a pop-up window for an application, based on a user input, or may be displayed as a split window for an application that is being split and displayed on the display. The electronic device 200 may guide a user to an area expected to be split by using the virtual split area 323 to guide the user. The electronic device 200 may determine the type of an application to be displayed on the virtual split area and a screen configuration (e.g., a split ratio), based on a user input to the virtual split area 323.

The electronic device 200 may display a handle at the top to guide the user to move the first window area A and the virtual split area 323. The handle displayed at the top of the first window area A and/or the virtual split area 323 may be displayed in a darker color compared to the first window area A and the virtual split area 323. The electronic device 200 may provide a guide to allow the user to move the first window area A and the virtual split area 323 by applying a user input to the handle, based on a state in which the user has no experience of moving the first window area A and the virtual split area 323 by using the handle, and may provide a guide for adjusting the position and size of a split screen.

In image 301 of FIG. 3A, the electronic device 200 may display at least one icon 321 and a background screen 322 on the display 230.

In image 303 of FIG. 3A, the electronic device 200 may move the first window area A, based on the position of the first user input 320. The electronic device 200 may move the first window area A to the right, based on the first user input 320 being moved to the right while being applied.

In image 303 of FIG. 3A, the electronic device 200 may display at least one icon 321a in a dotted line and dim the background screen 322 to be displayed blurred when the first window area A is dragged through the first user input 320. Dimming may refer to an operation of adding a semi-transparent shaded area to emphasize a pop-up screen from the background. The added semi-transparent shaded area may be referred to as a "dim." The electronic device 200 may display the at least one icon 321a penetrating the semi-transparent shaded area and the background screen 322 in a blurred manner. The electronic device 200 may change display of the at least one icon 321 and the background screen 322 to indicate that the screen may be split left and right.

In image 305 of FIG. 3A, the electronic device 200 may display the virtual split area 323 separated from the first window area A in a left area of the center of the display 230 and display the first window area A in a right area, based on the first window area A coming in contact with a right edge area.

The first window area A may be displayed on a background screen 322a shown in image 301. The electronic device 200 may display only the background screen 322 instead of displaying the icon 321 in an area 322a where the first window area A is positioned, and may display a layout of the at least one icon 321 in the virtual split area 323 separated from the first window area A. The electronic device 200 may display the layout of icons 321 in the layout 323 of the virtual split area 323. The layout of the icons 321 may be indicated in a dotted line.

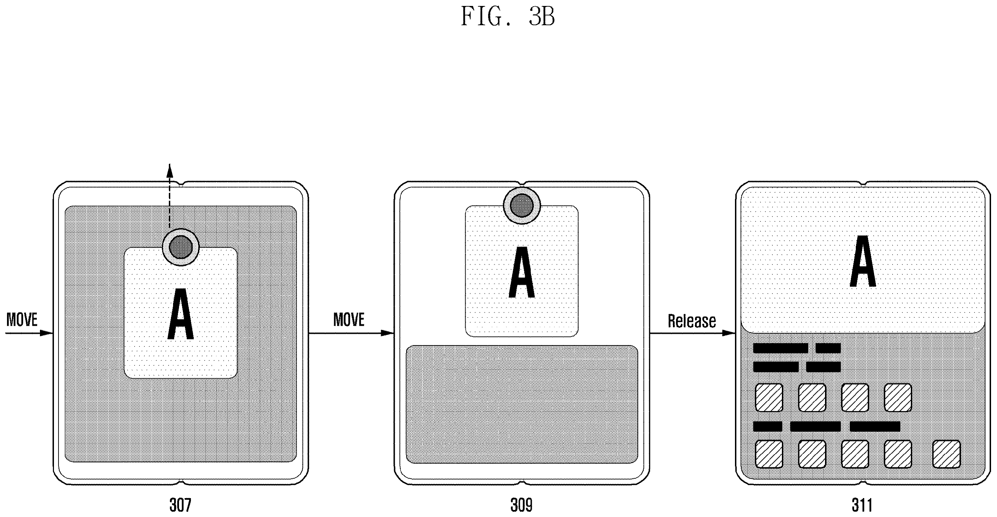

In image 307 of FIG. 3B, the electronic device 200 may move a first window area A, based on the position of a first user input 320. The electronic device 200 may move the first window area A in an arrow direction in image 307 (e.g., upwards from the electronic device), based on the first user input 320 being moved upwards while being applied.

In image 309 of FIG. 3B, the electronic device 200 may display the layout of the virtual split area (e.g., the virtual split area 323 of FIG. 3A) separated from the first window area A in a lower area of the center of the display 230 and display the first window area A in an upper area, based on the first window area A coming in contact with an upper edge area. When a user input (e.g., a touch input) is detected in the first window area A and the user input is detected in the upper edge area through a drag, the electronic device 200 may determine that the first window area A has come in contact with the upper edge area.

According to an embodiment, the electronic device 200 may separately display the layout for the virtual split area 323 in an area that does not overlap with the first window area A while moving the first window area A according to a user input to the first window area A.

In image 309 of FIG. 3B, when a user input (e.g., a release) is detected while the layout of the virtual split area (e.g., the virtual split area 323 of FIG. 3A) is displayed in the area that does not overlap with the first window area A, the electronic device 200 may split the screen of the display to display a first split area and a second split area. The electronic device 200 may expand and display the first window area in the first split area. That is, an application execution screen corresponding to the first window area may be displayed in the first split area. The second split area may correspond to a virtual split area. That is, the second split area may refer to the virtual split area described above. A list of at least one application may be displayed in the second split area. The list of the application may be displayed in a relatively darker color unlike the application layout 323 illustrated in FIG. 3A.

In image 311 of FIG. 3B, the electronic device 200 may display the first window area A expanded left and right in the upper area and display the list of applications displayable in the virtual split area (e.g., the virtual split area 323 of FIG. 3A) in the lower area, based on the first user input 320 disappearing. The list of applications may be automatically arranged based on how frequently the user of the electronic device 200 uses each application, or may be preset. Alternatively, the electronic device 200 may present a preset list of applications in a situation where the user has no experience of using the list of applications to be displayed, thereby improving the user's out-of-box experience (OOBE). The electronic device 200 may store the list of applications to be displayed in the virtual split area of the display 230 in a memory (e.g., the memory 220 of FIG. 2), based on a user input.

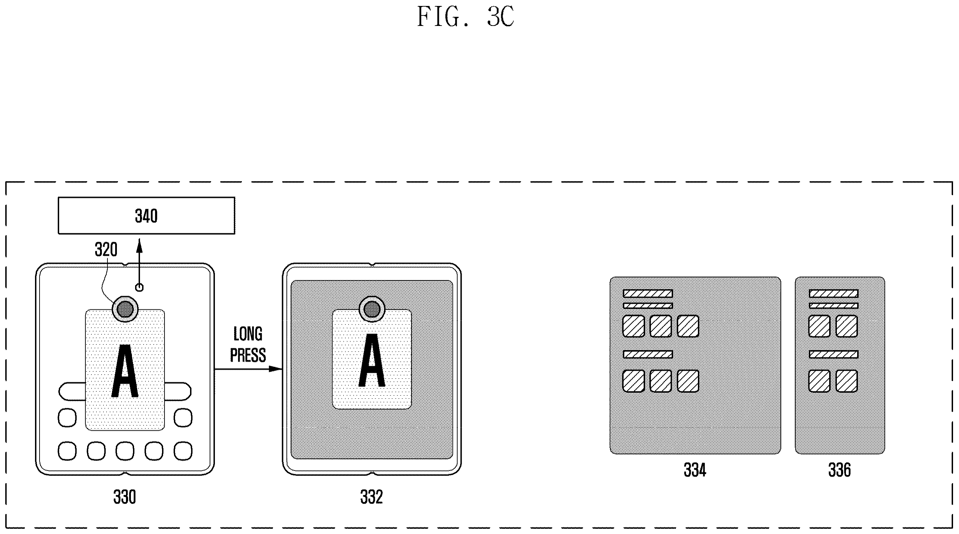

In image 330 of FIG. 3C, the electronic device 200 may display a first window area A floating in the upper layer, based on a first user input 320 being detected on a screen 340 on which icons corresponding to applications are gathered on the display 230. The first window area A may be displayed on the screen in which the icons corresponding to the applications are gathered.

In image 332 of FIG. 3C, the electronic device 200 may display the screen 340 in which the icons corresponding to the applications are gathered by removing execution elements and leaving only a background screen, based on the first user input 320 being a long-touch input. The electronic device 200 may apply a visual effect of dimming the background screen (e.g., the background screen 322 of FIG. 3A). The display (e.g., the display 230 of FIG. 2) has a layer structure, and may display a plurality of screens to overlap. According to an embodiment, the visual effect of dimming may be applied to a layer higher than the background screen 322. The layer to which the visual effect of dimming is applied may be positioned lower than the first window area A and higher than the background screen 322.

The electronic device 200 may display a list of applications, based on the size of an area in which the background screen 322 is dimmed. The list of applications may vary depending on the size of the area in which the background screen is dimmed. The form of the displayed list of applications may vary depending on the size of the area 334 and 336 in which the background screen 322 is dimmed.

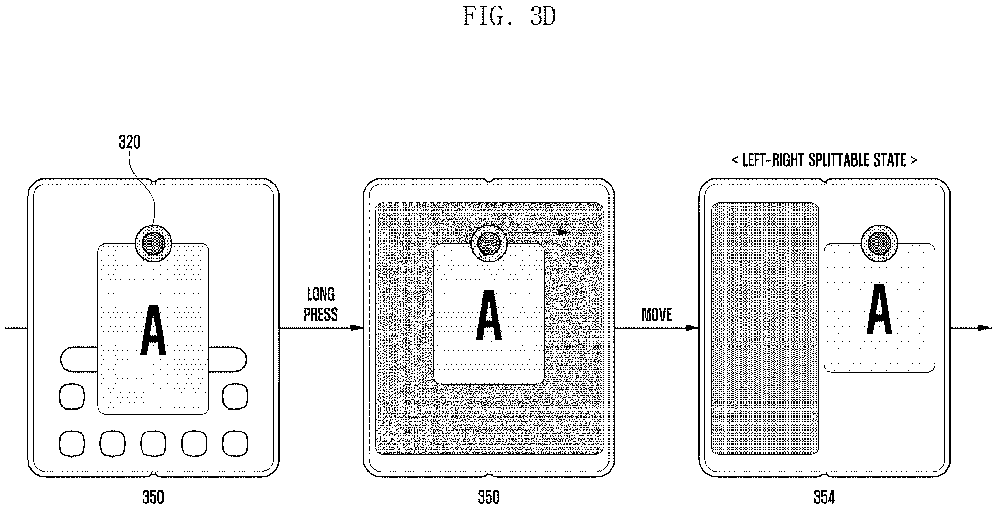

In image 350 of FIG. 3D, the electronic device 200 may detect the first user input 320 within the first window area displayed in the upper layer on the display 230. The electronic device 200 may display the first window area A floating in the upper layer, based on the first user input 320 being detected on a screen in which icons corresponding to applications are gathered.

In image 352 of FIG. 3D, the electronic device 200 may display the screen in which the icons corresponding to the applications are gathered by removing execution elements and leaving only a background screen, based on the first user input 320 being a long-touch input. The electronic device 200 may apply a visual effect of dimming the background screen.

In image 354 of FIG. 3D, the electronic device 200 may move the first window area A, based on the position of the first user input 320. The electronic device 200 may move the first window area A to the right, based on the first user input 320 being moved to the right while being applied. The electronic device 200 may display a layout of a virtual split area separated from the first window area A in a left area of the center of the display 230 and display the first window area A in a right area of the center of the display 230, based on the first window area A coming in contact with a right edge area.

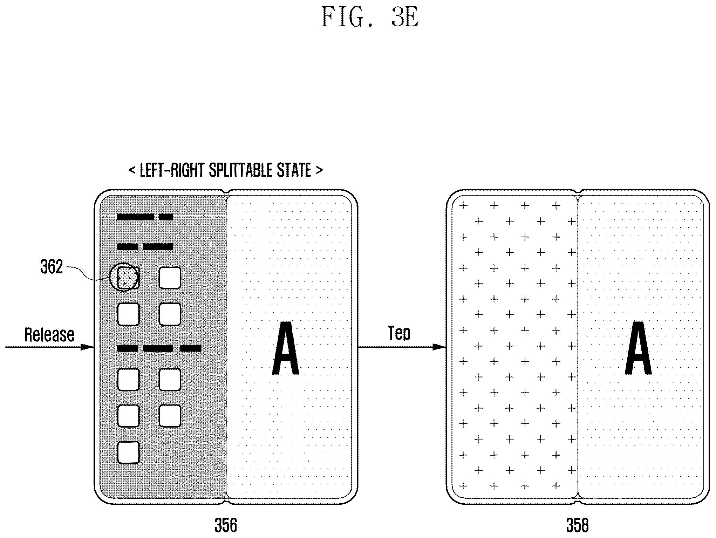

In image 356 of FIG. 3E, the electronic device 200 may display a list of applications in a virtual split area displayed on the left. The list of applications may be automatically arranged based on how frequently the user of the electronic device 200 uses each application, or may be preset. The electronic device 200 may store the list of applications to be displayed in the virtual split area of the display 230 in the memory 220 of FIG. 2, based on a user input. The electronic device 200 may detect the user input on the list of the applications.

In image 358 of FIG. 3E, the electronic device 200 may detect a user input on the list of applications, and may display an execution screen of an application to which the user input has been applied in the virtual split area 323 on the left.

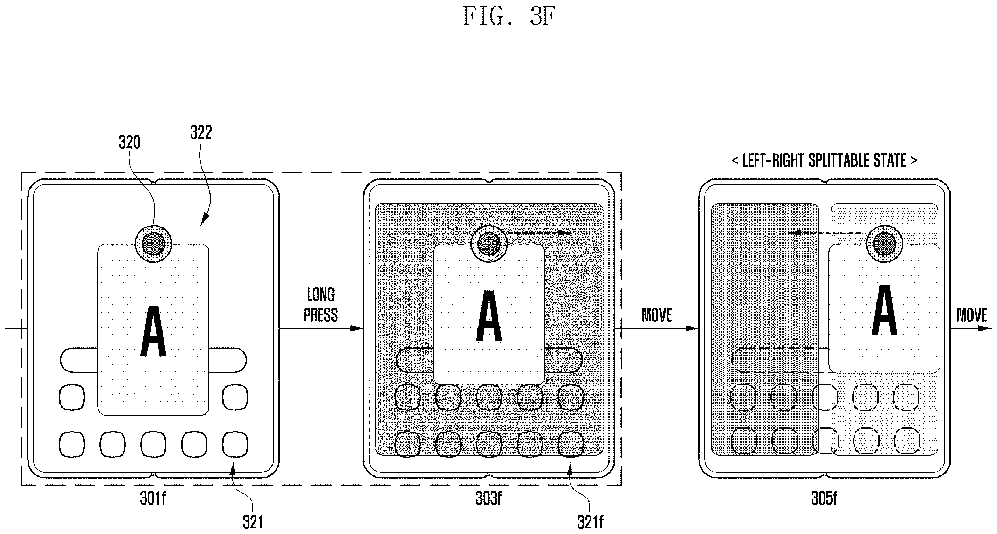

In image 301f of FIG. 3F, the electronic device 200 may display at least one icon 321 and a background screen 322.

In image 303f, the electronic device 200 may display at least one icon 321f in a dotted line, and may display the background screen 322 to be blurred. The electronic device 200 may change display of the at least one icon 321 and the background screen 322 to indicate that the screen may be split left and right.

In image 305f, the electronic device 200 may display a blurred (or dimmed) semi-transparent panel on a split screen in an area where a first window area A is positioned.

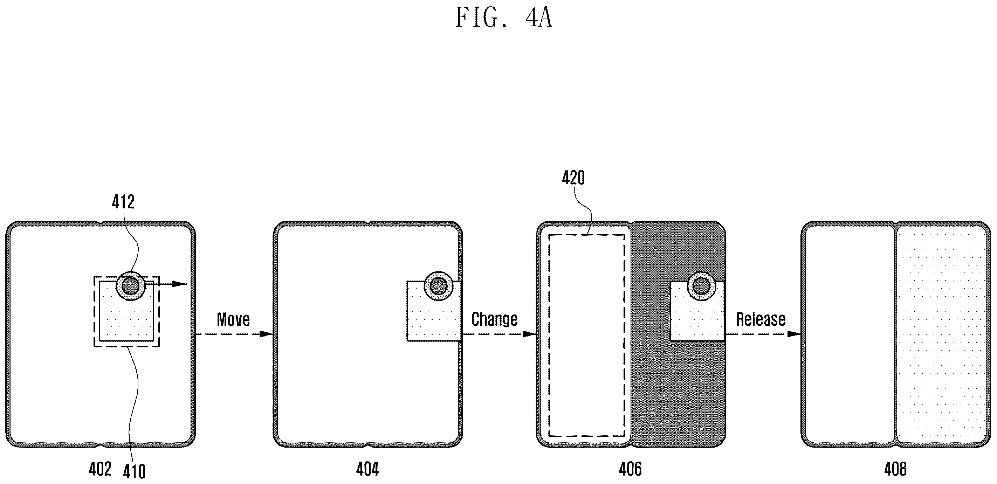

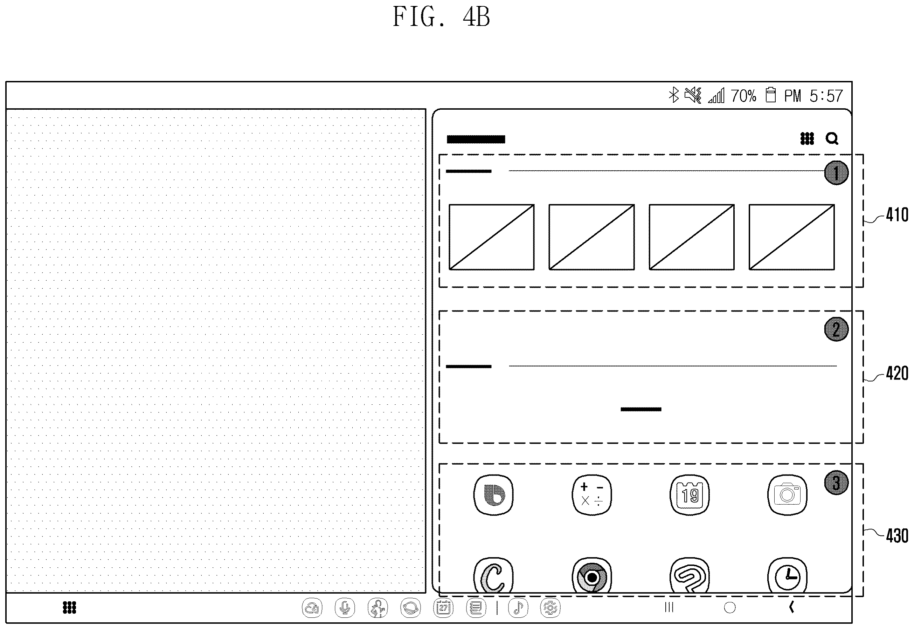

FIG. 4A and FIG. 4B illustrate screen splitting of an electronic device and a list of applications displayed on a split screen.

In image 402 of FIG. 4A, the electronic device (e.g., the electronic device 200 of FIG. 2) may detect a first user input 412 within a first window area 410 displayed in an upper layer on a display (e.g., the display 230 of FIG. 2) under control of a processor (e.g., the processor 210 of FIG. 2).

In image 404 of FIG. 4A, the electronic device 200 may move the first window area, based on the position of the first user input 412. The electronic device 200 may move the first window 410 A to the right, based on the first user input 412 being moved to the right while being applied.

In image 406 of FIG. 4A, the electronic device 200 may display a layout 420 of a virtual split area separated from the first window area in a left area of the center of the display 230, based on the first window area 410 coming in contact with a right edge area.

In image 408 of FIG. 4A, the electronic device 200 may display the layout 420 of the virtual split area in the left area of the center of the display 230 and display a layout of the first window area in the right area, based on a first user input 412 not being detected in the first window area 410.

The electronic device 200 may display the first window area expanded up and down in the right area and display a list of applications displayable in the layout 420 of the virtual split area in the left area, based on the first user input 412 disappearing. The list of applications may be automatically arranged based on how frequently a user of the electronic device 200 uses each application, or may be preset. The electronic device 200 may store the list of applications to be displayed in the virtual split area of the display 230 in a memory (e.g., the memory 220 of FIG. 2), based on a user input. Alternatively, the list of applications may be displayed on the first window area positioned on the right.

FIG. 4B illustrates a list of applications displayed on a split screen.

The electronic device 200 may display icons corresponding to applications recently executed by the user on a first section 410. The electronic device 200 may display icons corresponding to applications most frequently executed by the user during a specified period (e.g., the past month) on a second section 420. The specified period may vary depending on a configuration. The electronic device 200 may display preset icons in a third section 430.

Although FIG. 4B shows that the first section 410 is positioned at the top, the second section 420 is positioned in the middle, and the third section 430 is positioned at the bottom, the position of each section may vary depending on a configuration. For example, the electronic device 200 may display icons corresponding to applications most frequently executed by the user in the past month in the top section according to a user configuration.

Although the number of displayed icons is assumed to be 4 or 8 in FIG. 4B, the number of displayed icons may vary depending on a configuration. The electronic device 200 may store a list of applications to be displayed in the memory (e.g., the memory 220 of FIG. 2), based on a user input.

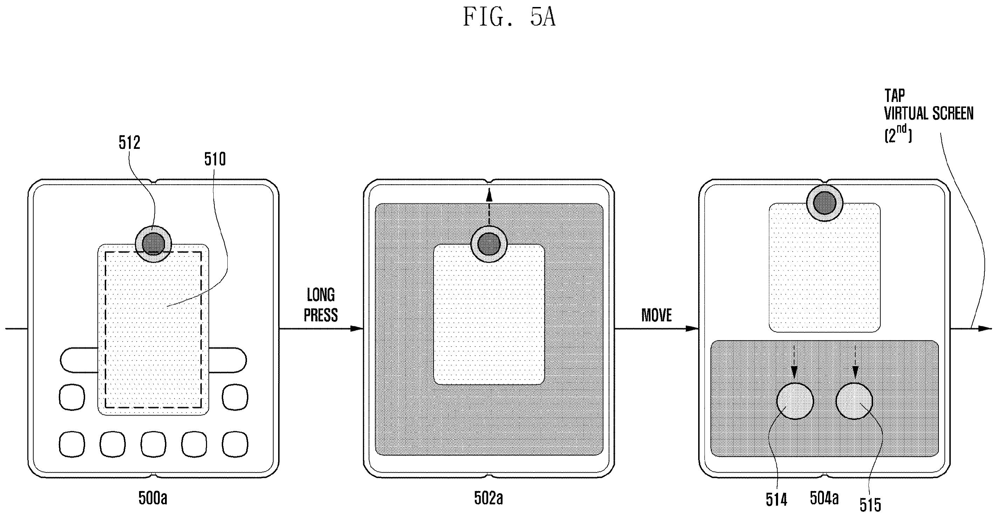

FIG. 5A to FIG. 5F illustrate a process of splitting a screen into three parts on an electronic device according to an embodiment.

In image 500a of FIG. 5A, the electronic device (e.g., the electronic device 200 of FIG. 2) may detect a first user input 512 within a first window area 510 displayed in an upper layer on a display (e.g., the display 230 of FIG. 2) under control of a processor (e.g., the processor 210 of FIG. 2). The first window area 510 may be displayed on a screen in which icons corresponding to applications are gathered.

In image 502a of FIG. 5A, the electronic device 200 may display the screen in which the icons corresponding to the applications are gathered by removing execution elements and leaving only a background screen, based on the first user input 512 being a long-touch input. The electronic device 200 may apply a visual effect of dimming the background screen. The electronic device 200 may move the first window area 510, based on the position of the first user input 512. The electronic device 200 may move the first window area 512 upwards, based on the first user input 512 being moved upwards while being applied.

In image 504a of FIG. 5A, the electronic device 200 may display a layout of a virtual split area separated from the first window area in a lower area of the center of the display 230 and display the first window area 510 in an upper area, based on the first window area 510 coming in contact with an upper edge area. The electronic device 200 may detect a second user input 514 in the virtual split area while the first user input 512 in the first window area 510 is maintained. The electronic device 200 may receive the second user input 514 or receive a multi-touch input 514 and 515 while the first user input 512 is maintained. The multi-touch input is two or more touches being input simultaneously and/or two or more touches being input sequentially on the display (e.g., the display 230 of FIG. 2).

The electronic device 200 may divide a screen differently depending on the type of a touch input and/or the number of touch inputs. For example, when there are three touch inputs, the electronic device 200 may divide the screen into three screens, which is merely for illustration. The number of split screens is not limited to three, and may vary depending on the number of touch inputs.

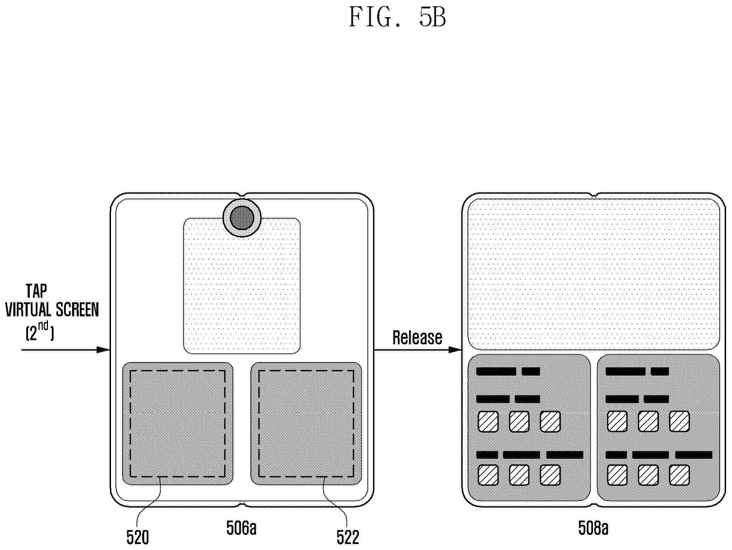

In image 506a of FIG. 5B, the electronic device 200 may divide the virtual split area into a plurality of screens and display the screens, based on the second user input 514 being detected in the virtual split area. For example, the electronic device 200 may divide the virtual split area at 5:5 on a vertical axis to display the same, based on the second user input 514 in the virtual split area being a relatively short touch input rather than a long-touch input. The electronic device 200 may divide the virtual split area into a (2-1)th area 520 and a (2-2)th area 522 to display the areas.

According to an embodiment, the electronic device 200 may delete a displayed specific area, based on a user input of swiping the (2-1)th area 520 and the (2-2)th area 522. For example, the electronic device 200 may delete the displayed (2-2)th area 522 and display only the (2-1)th area 520, based on a user input of swiping the (2-2)th area 522 outside a right edge area being detected. The electronic device 200 may delete the displayed (2-2)th area 522, and may display the (2-1)th area 520 to be expanded.

In image 508a of FIG. 5b, the electronic device 200 may display the first window area 510 to be expanded in the upper area of the center of the display 230, based on the first user input 512 in the first window area 510 terminating. The electronic device 200 may display a list of applications in the (2-1)th area 520 and the (2-2)th area 522, based on both the first user input 512 and the second user input 514 on the display 230 terminating. The list of applications may be automatically arranged based on how frequently a user of the electronic device 200 uses each application, or may be preset. The electronic device 200 may store the list of applications to be displayed in the virtual split area of the display 230 in a memory (e.g., the memory 220 of FIG. 2), based on a user input.

According to an embodiment, the electronic device 200 may display lists of same types of applications in the (2-1)th area 520 and the (2-2)th area 522. The electronic device 200 may not display an icon corresponding to a specific application in the (2-2)th area 522, based on a touch input to the specific application being detected in the (2-1)th area 520. On the contrary, the electronic device 200 may not display an icon corresponding to a specific application in the (2-1)th area 520, based on a touch input to the specific application being detected in the (2-2)th area 522.

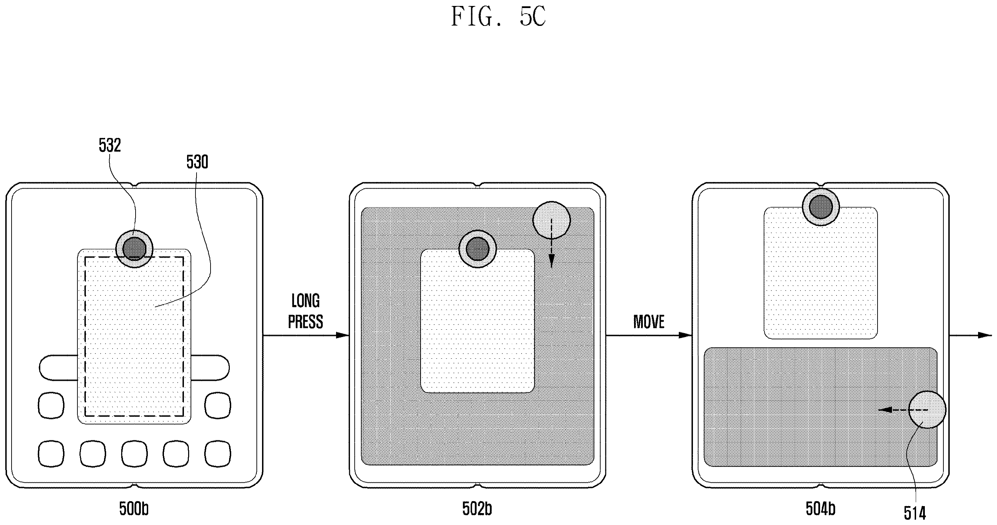

In image 500b of FIG. 5C, the electronic device (e.g., the electronic device 200 of FIG. 2) may detect a first user input 532 within a first window area 530 displayed in an upper layer on the display (e.g., the display 230 of FIG. 2) under control of the processor (e.g., the processor 210 of FIG. 2). The first window area 530 may be displayed on a screen in which icons corresponding to applications are gathered.

In image 502b of FIG. 5C, the electronic device 200 may display the screen in which the icons corresponding to the applications are gathered by removing execution elements and leaving only a background screen, based on the first user input 532 being a long-touch input. The electronic device 200 may impart a visual effect of dimming the background screen. The electronic device 200 may move the first window area 530, based on the position of the first user input 532. The electronic device 200 may move the first window area 532 upwards, based on the first user input 532 being moved upwards while being applied. Further, the electronic device 200 may detect a second user input 534 on the background screen. The electronic device 200 may adjust the position and size of the background screen that is dimmed, based on the second user input 534. That is, the electronic device 200 may adjust the position of an area corresponding to the background screen, based on the second user input 534 at the same time as adjusting the position of the first window area 530, based on the first user input 532.

In image 504b of FIG. 5C, the electronic device 200 may detect a third user input 536 to an edge area in the area corresponding to the background screen. Although image 504b shows that a user input is detected in a right edge area, an edge area may exist on the top, bottom, left, and right.

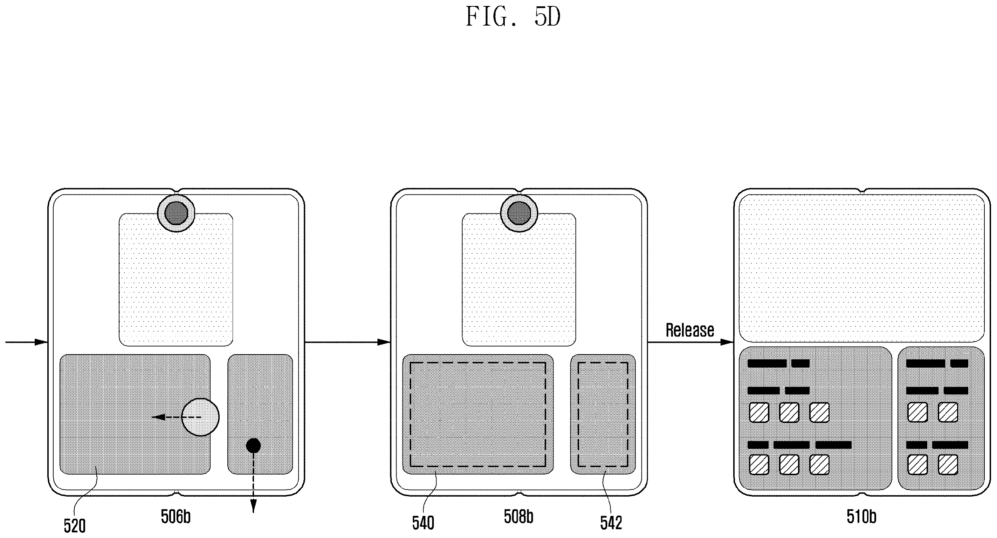

In image 506b of FIG. 5D, the electronic device 200 may determine the size of the area corresponding to the background screen, based on the third user input 536. When the third user input 536 moves to the left while being applied to the right edge area, the electronic device 200 may move a right portion of the area corresponding to the background screen. The electronic device 200 may display in real time another area separated from the area corresponding to the background screen in a space left by moving the area corresponding to the background screen to the right. The size and position of the separated other area may vary depending on the position of the third user input 536.

In image 508b of FIG. 5D, the electronic device 200 may display the area 540 corresponding to the background screen and the separated other area 542 to be expanded, based on the third user input 536 terminating. Unlike the first screen 520 and the second screen 522 being formed at a ratio of 5:5 in image 506a, the ratio of screens formed may vary depending on the position of the third user input 536 in image 508b.

In image 510b of FIG. 5D, the electronic device 200 may display a list of applications in the area 540 corresponding to the background screen and the separated other area 542. The list of applications may be automatically arranged based on how frequently the user of the electronic device 200 uses each application, or may be preset.

According to an embodiment, the electronic device 200 may display lists of the same types of applications in the area 540 corresponding to the background screen and the separated other area 542. The electronic device 200 may not display an icon corresponding to a specific application in the separated other area 542, based on a touch input to the specific application being detected in the area 540 corresponding to the background screen. On the contrary, the electronic device 200 may not display an icon corresponding to a specific application in the area 540 corresponding to the background screen, based on a touch input to the specific application being detected in the separated other area 542.

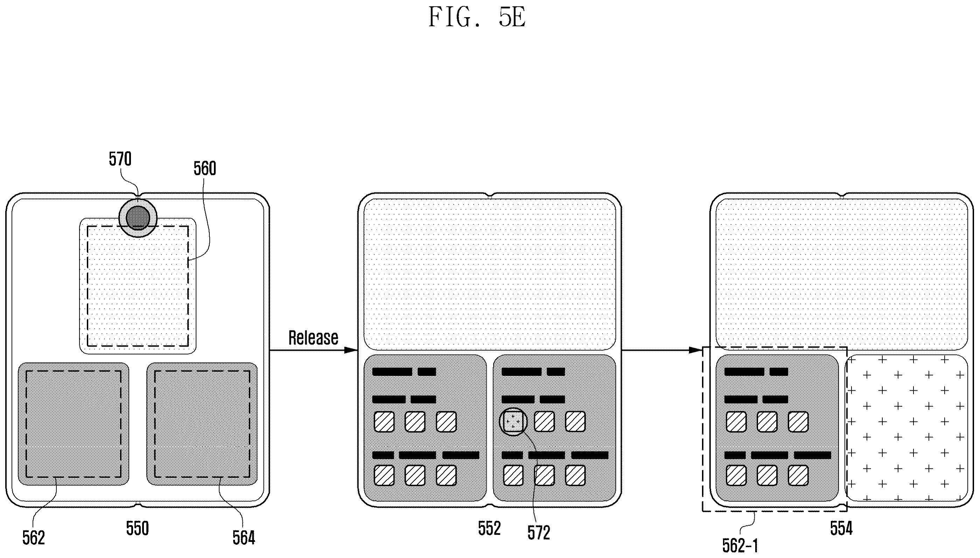

FIG. 5E illustrates an embodiment in which when an application is selected in one area on the display 230 being divided into three areas, the selected application is not displayed in the other areas.

In image 550 of FIG. 5E, the electronic device 200 may display a first screen 560, a second screen 562, and a third screen 564 on the display 230 through a process of FIG. 5A or FIG. 5B.

In image 552 of FIG. 5E, the electronic device 200 may display the first screen 560 to be expanded left and right in an upper area of the center of the display 230, based on a termination first user input 570 detected on the first screen 560. The electronic device 200 may display a list of applications on the second screen 562 and the third screen 564, based on a termination first user input 570 detected on the first screen 560. The list of applications may be automatically arranged based on how frequently a user of the electronic device 200 uses each application, or may be preset. The electronic device 200 may detect a second user input 572 to a specific application B on the third screen 564.

In image 554 of FIG. 5E, the electronic device 200 may display an execution screen of the specific application B on the third screen 564, based on the second user input 572 to the specific application B being detected on the third screen 564. The electronic device 200 may delete the specific application B displayed from the second screen 562-1, based on the second user input 572 to the specific application B being detected on the third screen 564.

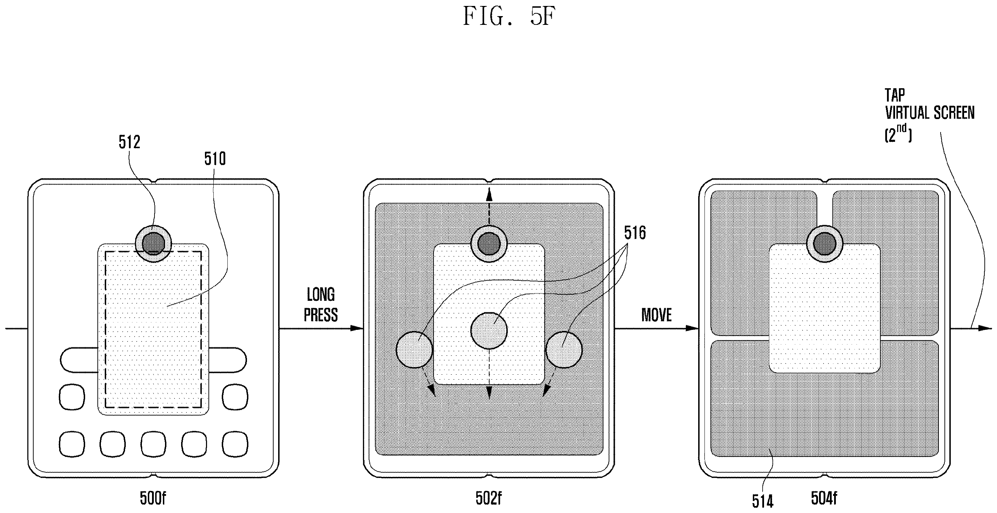

In image 500f of FIG. 5F, the electronic device 200 may display a screen in which icons corresponding to applications are gathered by removing execution elements and leaving only a background screen, based on a first user input 512 being a long-touch input. The electronic device 200 may impart a visual effect of dimming the background screen. The electronic device 200 may move the first window area 510, based on the position of the first user input 512. The electronic device 200 may move the first window area 510 in a direction corresponding to the moving direction of the first user input 512, based on a position where the first user input 512 is input being moved (e.g., moved upwards) while the first user input 512 is maintained (e.g., the first window area 510 is moved upwards as the first user input 512 is moved upwards).

In image 502f of FIG. 5F, when a multi-touch 516 drag input in a specific direction is detected while a touch input is maintained on the first window area 510, the electronic device 200 may display a split screen on the display 230. The electronic device 200 may determine the number of split screens according to the number of multi-touches 516 and control areas 514 corresponding to a plurality of split screens to be displayed on the entire display 230, based on the input through the multi-touch 516 being detected.

Although FIG. 5F assumes three multi-touches, which is only for illustration, the number of multi-touches is not limited thereto. For example, when three multi-touch inputs (e.g., a drag input) are detected, the electronic device 200 may display three multi-split screens and display the first window area 510 (e.g., a semi-transparent split guide panel) on the multi-split screens together.

In image 504f of FIG. 5F, the electronic device 200 may maintain the first window area 510 as a pop-up window even when the input through the multi-touch 516 is not detected after displaying the plurality split screens on the entire display 230. The electronic device 200 may display a screen of the first window area 510 on a split screen, based on a user input to move the first window area 510 being detected on the split screen.

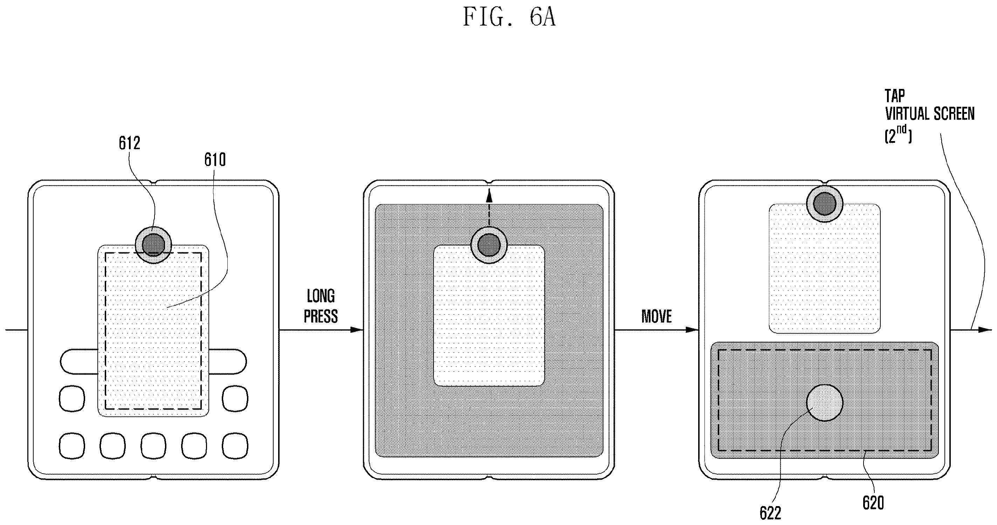

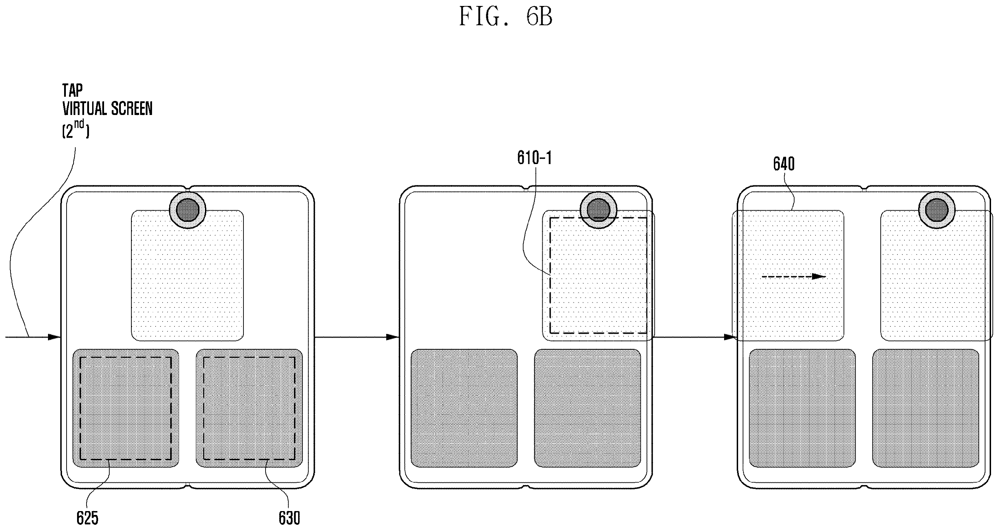

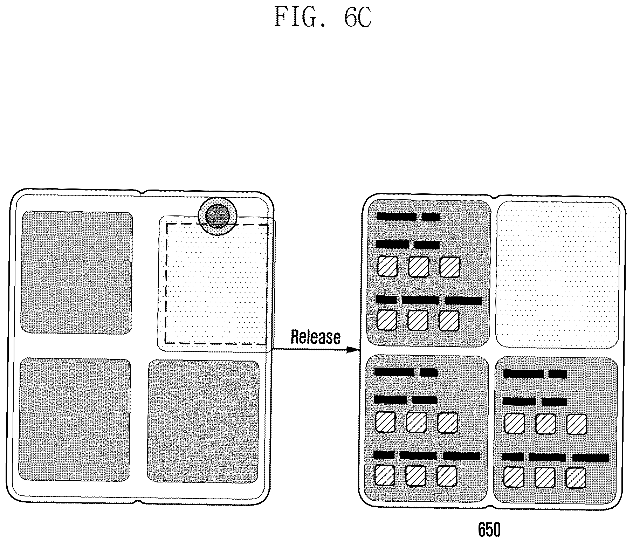

FIG. 6A to FIG. 6C illustrate a process of splitting a screen into four parts on an electronic device according to an embodiment.

In image 610 of FIG. 6A, the electronic device (e.g., the electronic device 200 of FIG. 2) may detect a first user input 612 within a first window area 610 displayed in an upper layer on a display (e.g., the display 230 of FIG. 2) under control of a processor (e.g., the processor 210 of FIG. 2). The first window area 610 may be displayed on a screen in which icons corresponding to applications are gathered. The electronic device 200 may display the screen in which the icons corresponding to the applications are gathered by removing execution elements and leaving only a background screen, based on the first user input 612 being a long-touch input. The electronic device 200 may impart a visual effect of dimming the background screen. The electronic device 200 may move the first window area 610, based on the position of the first user input 612. The electronic device 200 may move the first window area 610 upwards, based on the first user input 612 moving upwards while being applied.

The electronic device 200 may display a layout of a virtual split area 620 separated from the first window area 610 in a lower area of the center of the display 230 and display the first window area 610 in an upper area, based on the first window area 610 coming in contact with an upper edge area. The electronic device 200 may detect a second user input 622 on the virtual split area 620 while the first user input 612 on the first window area 610 is maintained.

The electronic device 200 may divide the virtual split area 620 at 5:5 on the vertical axis to display the same, based on the second user input 622 detected on the virtual split area 620 being a relatively short touch input rather than a long-touch input. The electronic device 200 may divide the virtual split area 620 into a (2-1)th area 625 and a (2-2)th area 630 to display the areas.

The electronic device 200 may display a layout 640 of a second virtual split area separated from the first window area 610-1 in the left area of the center of the display 230, based on the first window area 610-1 coming into contact with a right edge area while the first user input 612 on the first window area 610-1 is maintained. The second virtual split area may refer to an area separated from the (2-1)th area 625 and the (2-2)th area 630. The size and position of the second virtual split area may be determined based on the size and position of the first window area 610-1. The electronic device 200 may impart a visual effect that the layout 640 of the second virtual split area comes out from the left area of the display 230, based on the first window area 610-1 coming into contact with the right edge area. The size of the layout 640 of the second virtual split area may vary depending on the size of the display 230. The layout 640 of the second virtual split area may have the same size as the size of the first window area 610-1. A virtual split area may refer to a virtual area for a window for which an application to be executed has not been determined. The virtual split area may be displayed as a pop-up window for an application, based on a user input, or may be displayed as a split window of an application being split and displayed on the display. The electronic device 200 may guide the user to an area expected to be split by using the virtual split area.

In image 650, the electronic device 200 may display a list of applications in the second virtual split area, the (2-1)th area 625, and the (2-2)th area 630, based on the first user input 612 on the first window area 610-1 terminating. The electronic device 200 may display a split screen, based on the position and shape of the layout 640 of the second virtual split area. For example, the electronic device 200 may display an execution screen of a specific application B to which a touch input has been applied in the (2-2)th area 630, based on the touch input to the specific application B on the (2-2)th area 630. According to an embodiment, the electronic device 200 may delete the displayed specific application B from the layout 640 of the second virtual split area and the (2-1)th area 625, based on a user input to the specific application B on the (2-2)th area 630.

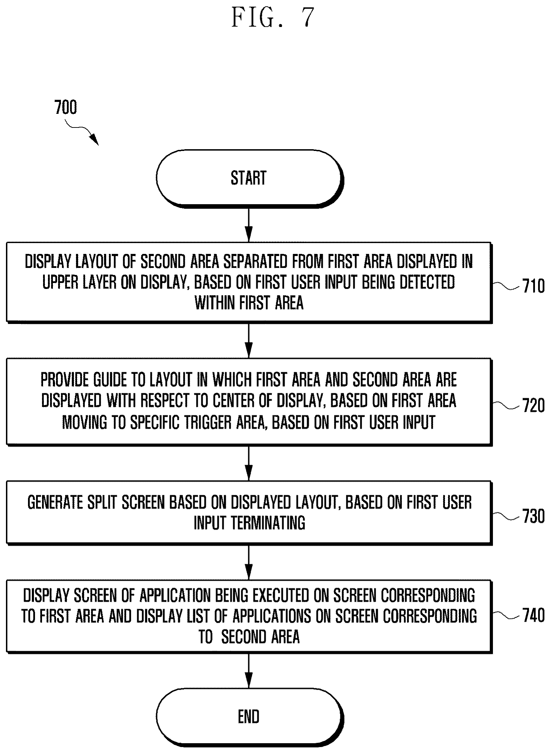

FIG. 7 is a flowchart illustrating a method for providing a guide for screen splitting of an electronic device according to an embodiment.

Operations described with reference to FIG. 7 may be implemented based on instructions that may be stored in a computer recording medium or a memory (e.g., the memory 220 of FIG. 2). The illustrated method 700 may be executed by the electronic device (e.g., the electronic device 200 of FIG. 2) described above with reference to FIG. 1 to FIG. 6, and technical features described above will be omitted below. The order of the operations in FIG. 7 may be changed, some operations may be omitted, and some operations may be performed simultaneously.

In operation 710, the electronic device 200 may display a layout of a virtual split area separated from a first window area displayed in an upper layer on a display, based on a first user input being detected within the first window area, under control of a processor (e.g., the processor 210 of FIG. 2). The electronic device 200 may detect the first user input (e.g., the first user input 320 of FIG. 3A) within the first window area (e.g., the first window area A of FIG. 3A) displayed in the upper layer. The electronic device 200 may display the layout of the virtual split area separated from the first window area A, based on the first user input 320 being determined to be a long-touch input. The first window area A to which the user input is applied may be displayed in a darker color than the virtual split area. The electronic device 200 may impart a visual effect of dimming the virtual split area.

In operation 720, the electronic device 200 may provide a guide to a layout in which the first window area and the virtual split area are displayed with respect to the center of the display 230, based on the first window area moving to a specific trigger area, based on the first user input. The trigger area may include an upper edge area of the display 230, a lower edge area at the bottom, a left edge area of the display 230, and a right edge area at the right of the display 230.

In operation 730, the electronic device 200 may generate a split screen based on the displayed layout, based on the first user input terminating.

In operation 740, the electronic device 200 may display a screen of an application being executed on a screen corresponding to the first window area and display a list of applications on a screen corresponding to the virtual split area. The electronic device 200 may store the list of applications to be displayed in a memory (e.g., the memory 220 of FIG. 2), based on a user input. The list of applications may be automatically arranged based on how frequently a user of the electronic device 200 uses each application, or may be preset.

According to an embodiment, the electronic device 200 may display a layout of a virtual split area separated from a first window area displayed in an upper layer on the display 230, based on a first user input being detected within the first window area, may determine the position of the first window area and the position of the virtual split area, based on the first user input being applied to a specific trigger area in a situation where the first user input is detected, may display a list of preset applications in the virtual split area, and may determine content of a screen displayed in the virtual split area based on a second user input within the virtual split area.

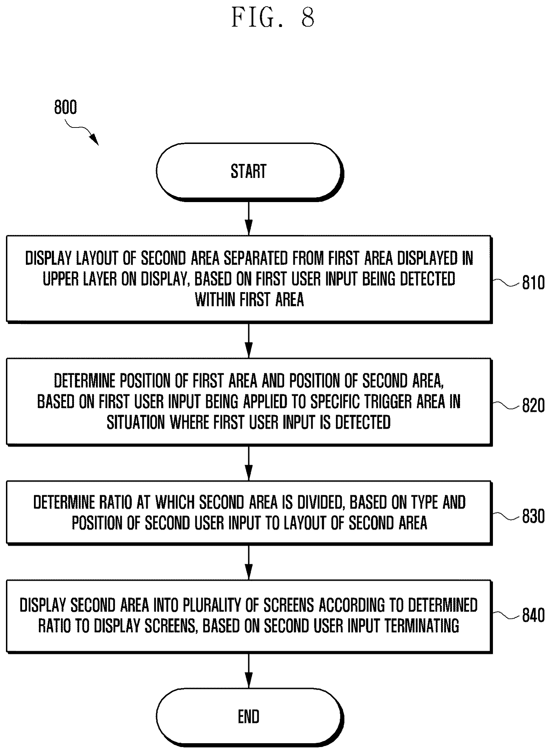

FIG. 8 is a flowchart illustrating a screen splitting method of an electronic device according to an embodiment.

Operations described with reference to FIG. 8 may be implemented based on instructions that may be stored in a computer recording medium or a memory (e.g., the memory 220 of FIG. 2). The illustrated method 800 may be executed by the electronic device (e.g., the electronic device 200 of FIG. 2) described above with reference to FIG. 1 to FIG. 6, and technical features described above will be omitted below. The order of the operations in FIG. 8 may be changed, some operations may be omitted, and some operations may be performed simultaneously.

In operation 810, the electronic device 200 may display a layout of a virtual split area separated from a first window area displayed in an upper layer, based on a first user input being detected within the first window area, under control of a processor (e.g., the processor 210 of FIG. 2). The electronic device 200 may detect the first user input (e.g., the first user input 320 of FIG. 3A) within the first window area (e.g., the first window area A of FIG. 3A) displayed in the upper layer. The electronic device 200 may display the layout of the virtual split area separated from the first window area A, based on the first user input 320 being determined to be a long-touch input. The first window area A to which the user input is applied may be displayed in a darker color than the virtual split area. The electronic device 200 may impart a visual effect of dimming the virtual split area.

In operation 820, the electronic device 200 may determine the position of the first window area and the position of the virtual split area, based on the first user input being applied to a specific trigger area in a situation where the first user input is detected.

According to an embodiment, the trigger area may include an upper edge area of a display 230. The electronic device 200 may display a screen corresponding to the first window area in an upper area of the display 230 and display a screen corresponding to the virtual split area in a lower area of the display 230, based on the first user input being detected in the trigger area positioned in the upper area.

According to an embodiment, the trigger area may include a lower edge area of the display 230. The electronic device 200 may display the screen corresponding to the first window area in the lower area of the display 230 and display the screen corresponding to the virtual split area in the upper area of the display 230, based on the first user input being detected in the trigger area positioned in the lower area.

According to an embodiment, the trigger area may include a left edge area of the display 230. The electronic device 200 may display the screen corresponding to the first window area in a left area of the display 230 and display the screen corresponding to the virtual split area in a right area of the display 230, based on the first user input being detected in the trigger area positioned in the left area.

According to an embodiment, the trigger area may include a right edge area of the display 230. The electronic device 200 may display the screen corresponding to the first window area in the right area of the display 230 and display the screen corresponding to the virtual split area in the left area of the display 230, based on the first user input being detected in the trigger area positioned in the right area.

For example, the electronic device 200 may display the layout of the virtual split area separated from the first window area A in the left area of the center of the display (e.g., the display 230 of FIG. 2) and display the first window area A in the right area, based on the first window area A coming in contact with the right edge area. Alternatively, the electronic device 200 may display the layout of the virtual split area separated from the first window area in the lower area of the center of the display 230 and display the first window area A in the upper area, based on the first window area A coming in contact with the upper edge area.

In operation 830, the electronic device 200 may determine a ratio at which the virtual split area is divided, based on the type and position of a second user input to the layout of the virtual split area.

For example, the electronic device 200 may divide the virtual split area at 5:5 on a vertical axis to display the same, based on the second user input 514 in the virtual split area being a relatively short touch input rather than a long-touch input. The electronic device 200 may divide the virtual split area into a (2-1)th area (e.g., the (2-1)th area 520) and a (2-2)th area (e.g., the (2-2)th area 522) to display the areas.

Alternatively, the electronic device 200 may detect a third user input (e.g., the third user input 536 of FIG. 5B) to an edge area in the virtual split area. The electronic device 200 may determine the size of an area corresponding to a background screen, based on the third user input 536. When the third user input 536 moves to the left while being applied to a right edge area, the electronic device 200 may move a right portion of the area corresponding to the background screen. The electronic device 200 may display in real time another area separated from the area corresponding to the background screen in a space left by moving the area corresponding to the background screen to the right. The size and position of the separated other area may vary depending on the position of the third user input 536.

According to an embodiment, the electronic device 200 may determine to divide the virtual split area into two screens at a ratio of 5:5, based on the second user input being detected as a touch input.

According to an embodiment, the electronic device 200 may determine to divide the virtual split area into two screens with respect to a position where a long-press input ends, based on the second user input being detected as the long-press input.

In operation 840, the electronic device 200 may divide the virtual split area into a plurality of screens according to the determined ratio to display the screens, based on the second user input terminating.

According to an embodiment, the electronic device 200 may determine the size and display position of the virtual split area, based on the second user input to the layout of the virtual split area.

According to an embodiment, the electronic device 200 may display the screen corresponding to the first window area in the upper area of the display 230 and display the screen corresponding to the virtual split area in the lower area of the display 230, based on the first user input being detected in the trigger area positioned in the upper area, and may display the screen corresponding to the first window area in an upper right area of the display 230 and display a new split screen having the same size as the screen corresponding to the first window area in an upper left area of the display 230, based on the first user input being detected in the right edge area of the display 230.

According to an embodiment, the electronic device 200 may display a layout of a virtual split area separated from a first window area displayed in an upper layer on the display, based on a first user input being detected within the first window area, under control of the processor 210, may determine the position of the first window area and the position of the virtual split area, based on the first user input being applied to a specific trigger area in a situation where the first user input is detected, may display a list of preset applications in the virtual split area, and may determine content of a screen displayed in the virtual split area based on a second user input within the virtual split area.

An operating method of an electronic device may include displaying a layout of a virtual split area separated from a first window area, based on a first user input being detected within the first window area displayed in an upper layer on the display, determining a position of the first window area and a position of the virtual split area, based on the first user input being applied to a specific trigger area in a situation in which the first user input is detected, determining a ratio at which the virtual split area is divided, based on a type and a position of a second user input to the layout of the virtual split area, and dividing the virtual split area into a plurality of screens according to the determined ratio to display the plurality of screens, based on the second user input terminating.

An electronic device may include a display, a processor, and a memory, wherein the processor may: display a virtual split area separated from a first window area, based on a first user input being detected within the first window area that is displayed in an upper layer on the display and displays an application being executed; display the first window area and the virtual split area not to overlap with respect to a center of the display, based on the first window area moving to a specific trigger area according to the first user input; generate a split screen based on a layout displayed, based on the first user input terminating; display a screen of the application being executed in a first split area corresponding to the first window area; and display a list of applications in a second split area corresponding to the virtual split area.

The processor may provide a guide indicating that a size and a position of the virtual split area is adjustable by using a second user input while the first user input is maintained; and provide a guide indicating that the first split area is expanded left and right and displayed in an upper area with respect to the center of the display and the second split area corresponding to the virtual split area is displayed in a remaining lower area when the first user input in the first window area moves to an upper edge area through a drag input while being maintained.

The processor may provide a guide indicating that the first split area is expanded left and right and displayed in a lower area with respect to the center of the display and the second split area is displayed in a remaining upper area when the first user input in the first window area moves to a lower edge area through a drag input while being maintained.

The processor may provide a guide indicating that the first split area is expanded left and right and displayed in a right area with respect to the center of the display and the second split area is displayed in a remaining left area when the first user input in the first window area moves to a right edge area through a drag input while being maintained.

The processor may provide a guide indicating that the first split area is expanded left and right and displayed in a left area with respect to the center of the display and the second split area is displayed in a remaining right area when the first user input in the first window area moves to a left edge area through a drag input while being maintained.

The processor may: display a layout of the virtual split area separated from the first window area, based on the first user input being detected in the first window area displayed in the upper layer on the display; determine a position of the first split area and a position of the second split area, based on the first user input being applied to the specific trigger area in a situation in which the first user input is detected; and display a list of preset applications in the second split area, and determine content of a screen displayed in the second split area, based on a second user input in the second split area.

An electronic device may include a display, a processor, and a memory, wherein the processor may: display a layout of a virtual split area separated from a first window area, based on a first user input being detected within the first window area displayed in an upper layer on the display, determine a position of the first window area and a position of the virtual split area, based on the first user input being applied to a specific trigger area in a situation in which the first user input is detected, determine a ratio at which the virtual split area is divided, based on a type and a position of a second user input to the layout of the virtual split area, and divide the virtual split area into a plurality of screens according to the determined ratio to display the plurality of screens, based on the second user input terminating.

The processor may determine to divide the virtual split area into two screens according to a ratio of 5:5, based on the second user input being detected as a touch input.

The processor may determine to divide the virtual split area into two screens with respect to a position where a long-press input ends, based on the second user input being detected as the long-press input.

The processor may: divide the virtual split area into the two screens; display a list of preset applications on each of the two split screens; determine an application to be displayed based on a user input; and control, based on an application to be displayed on one split screen being determined, the determined application not to be displayed in the list on another split screen.

The trigger area may include an upper edge area of the display, and the processor may: display a screen corresponding to the first window area in an upper area of the display, based on the first user input being detected in the trigger area positioned in the upper area; and display a screen corresponding to the virtual split area in a lower area of the display.

The trigger area may include a lower edge area of the display, and the processor may: display a screen corresponding to the first window area in a lower area of the display, based on the first user input being detected in the trigger area positioned in the lower area; and display a screen corresponding to the virtual split area in an upper area of the display.

The trigger area may include a left edge area of the display, and the processor may: display a split screen corresponding to the first window area in a left area of the display, based on the first user input being detected in the trigger area positioned in the left area; and display a split screen corresponding to the virtual split area in a right area of the display.

The trigger area may include a right upper edge area of the display, and the processor may: display a split screen corresponding to the first window area in a right area of the display, based on the first user input being detected in the trigger area positioned in the right area; and display a screen corresponding to the virtual split area in a left area of the display.

The processor may determine a size and a display position of a split screen corresponding to the virtual split area, based on the second user input to the layout of the virtual split area.

The processor may: determine a height of the split screen corresponding to the virtual split area, based on the second user input to an upper edge area of the virtual split area; and determine a split ratio of the virtual split area, based on the second user input to left and right edge areas of the virtual split area.

The trigger area may include an upper edge area of the display, and the processor may: display a split screen corresponding to the first window area in an upper area of the display, based on the first user input being detected in the trigger area positioned in the upper area; display a split screen corresponding to the virtual split area in a lower area of the display; and display a first split screen corresponding to the first window area in an upper right area of the display and display a new split screen having the same size as the first split screen in an upper left area of the display, based on the first user input being detected in a right edge area of the display.

## Claims

1. An electronic device (200) comprising:
a display (230);
at least one processor (210); and
memory (220),
wherein the instructions, when executed by the at least one processor, cause the electronic device to:
based on a first user input being detected within a first window area which is displayed in an upper layer on the display and in which an application being executed is displayed, display a virtual split area (323) separated from the first window area (A);
based on the first window area moving to a specific trigger area according to the first user input, display the first window area and the virtual split area not to overlap with respect to a center of the display;
based on the first user input being terminated, generate a split screen, based on a displayed layout;
display a screen of the application being executed in a first split area corresponding to the first window area; and
display a list of applications in a second split area corresponding to the virtual split area.

2. The electronic device of claim 1, wherein the instructions, when executed by the at least one processor, cause the electronic device to:
provide a guide indicating that a size and a position of the virtual split area is adjustable using a second user input while the first user input is maintained; and
provide a guide indicating that the first split area is expanded left and right and displayed in an upper area and the second split area corresponding to the virtual split area is displayed in a remaining lower area with respect to the center of the display if the first user input in the first window area moves to an upper edge area through a drag input while the first user input is maintained.

3. The electronic device of claim 1, wherein the instructions, when executed by the at least one processor, cause the electronic device to:
provide a guide indicating that the first split area is expanded left and right and displayed in a lower area and the second split area is displayed in a remaining upper area with respect to the center of the display if the first user input in the first window area moves to a lower edge area through a drag input while the first user input is maintained.

4. The electronic device of claim 1, wherein the processor is configured to provide a guide indicating that the first split area is expanded left and right and displayed in a right area and the second split area is displayed in a remaining left area with respect to the center of the display if the first user input in the first window area moves to a right edge area through a drag input while the first user input is maintained.

5. The electronic device of claim 1, wherein the instructions, when executed by the at least one processor, cause the electronic device to:
provide a guide indicating that the first split area is expanded left and right and displayed in a left area and the second split area is displayed in a remaining right area with respect to the center of the display if the first user input in the first window area moves to a left edge area through a drag input while the first user input is maintained.

6. The electronic device of claim 1, wherein the instructions, when executed by the at least one processor, cause the electronic device to:
based on the first user input being detected in the first window area displayed in the upper layer on the display, display a layout of the virtual split area separated from the first window area;
based on the first user input being applied to the specific trigger area in a situation in which the first user input is detected, determine a position of the first split area and a position of the second split area; and
display a list of predetermined applications in the second split area, and determine content of a screen to be displayed in the second split area, based on a second user input within the second split area.

7. An electronic device comprising:
a display;
at least one processor; and
memory storing instruction,
wherein the instructions, when executed by the at least one processor, cause the electronic device to:
based on a first user input being detected within a first window area displayed in an upper layer on the display, display a layout of a virtual split area separated from the first window area;
based on the first user input being applied to a specific trigger area in a situation in which the first user input is detected, determine a position of the first window area and a position of the virtual split area;
determine a ratio at which the virtual split area is divided, based on a type and a position of a second user input to the layout of the virtual split area; and
based on the second user input being terminated, divide the virtual split area into a plurality of screens according to the determined ratio and display the plurality of screens.

8. The electronic device of claim 7, wherein the processor is configured to, based on the second user input being detected as a touch input, determine to divide the virtual split area into two screens according to a ratio of 5:5.

9. The electronic device of claim 7, wherein the processor is configured to, based on the second user input being detected as a long-press input, determine to divide the virtual split area into two screens with respect to a position where the long-press input ends.

10. The electronic device of claim 8 or 9, wherein the instructions, when executed by the at least one processor, cause the electronic device to:
divide the virtual split area into the two screens;
display a list of predetermined applications on each of the two split screens;
determine an application to be displayed, based on a user input; and
based on an application to be displayed on one split screen being determined, control the determined application not to be displayed in the list on the other split screen.

11. The electronic device of claim 7, wherein the trigger area comprises an upper edge area of the display, and
wherein the instructions, when executed by the at least one processor, cause the electronic device to:
based on the first user input being detected in the trigger area positioned in the upper area, display a screen corresponding to the first window area in an upper area of the display; and
display a screen corresponding to the virtual split area in a lower area of the display.

12. The electronic device of claim 7, wherein the trigger area comprises a lower edge area of the display, and
wherein the instructions, when executed by the at least one processor, cause the electronic device to:
based on the first user input being detected in the trigger area positioned in the lower area, display a screen corresponding to the first window area in a lower area of the display; and
display a screen corresponding to the virtual split area in an upper area of the display.

13. The electronic device of claim 7, wherein the trigger area comprises a left edge area of the display, and
wherein the instructions, when executed by the at least one processor, cause the electronic device to:
based on the first user input being detected in the trigger area positioned in the left area, display a split screen corresponding to the first window area in a left area of the display; and
display a split screen corresponding to the virtual split area in a right area of the display.

14. The electronic device of claim 7, wherein the trigger area comprises a right edge area of the display, and
wherein the instructions, when executed by the at least one processor, cause the electronic device to:
based on the first user input being detected in the trigger area positioned in the right area, display a split screen corresponding to the first window area in a right area of the display; and
display a screen corresponding to the virtual split area in a left area of the display.

15. The electronic device of claim 7, wherein the processor is configured to determine a size and a display position of a split screen corresponding to the virtual split area, based on the second user input to the layout of the virtual split area.
